# EUROPEAN PATENT APPLICATION

(11) **EP 4 488 399 A1**
(43) Date of publication of application: **08.01.2025**
(21) Application number: 23762908.4
(22) Date of filing: 01.03.2023
(51) Int. Cl.: C22C 38/00, C22C 38/02, C22C 38/04, C23C 2/00

(54) **COLD ROLLED STEEL PLATE FOR GALVANIZED STEEL PLATE, GALVANIZED STEEL PLATE AND MANUFACTURING METHOD THEREFOR**

(30) Priority: 01.03.2022 CN 202210194906
(71) Applicant: BAOSHAN IRON & STEEL CO., LTD., Shanghai 201900 (CN)
(72) Inventor: XIE, Shuang, Shanghai 201900 (CN); LI, Xufei, Shanghai 201900 (CN); ZHONG, Yong, Shanghai 201900 (CN); WANG, Li, Shanghai 201900 (CN)
(74) Representative: Kuhnen & Wacker Patent- und Rechtsanwaltsbüro PartG mbB
(86) International application number: PCT/CN2023/078975
(87) International publication number: WO 2023/165510

(57) **Abstract**

Disclosed in the present invention a cold rolled steel plate for a galvanized steel plate, containing Fe and inevitable impurities, and also containing the following chemical elements, in mass percent: 0.18-0.25% of C, 1.5-2.0% of Si, 1.5-2.3% of Mn, and 0.01-0.06% of Nb. The microstructure of the cold rolled steel plate is bainite+tempered martensite+residual austenite, wherein the volume fraction of bainite and tempered martensite is great than or equal to 95%. Accordingly, also disclosed in the present invention is a manufacturing method for the galvanized steel plate, comprising the steps: (1) smelting and casting to obtain a steel billet; (2) hot rolling; (3) cold rolling; (4) annealing: the annealing soaking temperature is 890-920 °C, the soaking and heat preservation time is 80-150s, and then cooling is performed at a cooling rate of 30-100 °C/s to reach 270-350 °C; (5) overaging: the overaging temperature is 450-475 °C, and the overaging time is 40-60s; (6) entering a zinc pot for galvanizing; (7) alloying; and (8) leveling.

## Description

### Technical Field

The present invention relates to a plate and a manufacturing method therefor, particularly a cold-rolled steel plate and a manufacturing method therefor.

### Background Art

In recent years, the market demand for weight loss in the automobile industry has further increased, and more and more automobile manufacturers have begun to invest in the research of lightweight vehicles, especially lightweight electric vehicles.

Electric vehicles have become the most popular car models in recent years. However, the vehicle's endurance has always been a major problem that hinders the development of electric vehicles, and lightweight of automobile structures plays a very important role in increasing the endurance mileage of electric vehicles and improving the practicality and comfort of electric vehicles.

It is well-known that high-strength steel is much suitable for the manufacture of automotive structures due to its excellent mechanical properties and usage performance. Meanwhile, coated steel plate has also been increasingly favored by automobile manufacturers in recent years due to its excellent manufacturability and corrosion resistance. However, currently there are few cold-rolled galvanized high-strength steel products with high hole expansion on the market.

Based on this, the present invention hopes to develop a new cold-rolled steel plate for a galvanized steel plate, and a galvanized steel plate based on the cold-rolled steel plate has an excellent performance while achieving lightweight, and is particularly suitable for the forming of high-strength vehicle components.

### Summary of the Invention

One of the objects of the present invention is to provide a cold-rolled steel plate for a galvanized steel plate, wherein the cold-rolled steel plate has a yield strength of ≥650 MPa, a tensile strength of ≥980 MPa, a uniform elongation of ≥7%, an elongation at break of ≥13%, and a hole expansion rate of ≥50%. The cold-rolled steel plate has characteristics of high ductility and high hole expansion rate, and has both high overall ductility and great part plastic deformation ability, thus the cold-rolled steel plate has a balanced performance and possesses great economic and social benefits.

In order to achieve the above object, the present invention provides a cold-rolled steel plate for a galvanized steel plate, which comprises Fe and inevitable impurities, and further comprises following chemical elements within following mass percentages:
C: 0.18-0.25%, Si: 1.5-2.0%, Mn: 1.5-2.3%, and Nb: 0.01-0.06%;
the microstructure of the cold-rolled steel plate is bainite + tempered martensite + residual austenite, wherein a volume fraction of bainite and tempered martensite is ≥95%.

Further, in the cold-rolled steel plate of the present invention, the mass percentages of each chemical elements are:
C: 0.18-0.25%, Si: 1.5-2.0%, Mn: 1.5-2.3%, Nb: 0.01-0.06%, and a balance of Fe and inevitable impurities.

Further, in the cold-rolled steel plate of the present invention, a volume fraction of residual austenite is ≥1.0%, such as ≥1.5%.

Further, in the cold-rolled steel plate of the present invention, a volume fraction of bainite and tempered martensite is 95-99%, and a volume fraction of residual austenite is 1-5%. In some embodiments, in the cold-rolled steel plate of the present invention, a volume fraction of bainite and tempered martensite is 95-98.5%, and a volume fraction of residual austenite is 1.5-5%.

Further, in the cold-rolled steel plate of the present invention, a size of an original austenite grain formed by annealing is between 10 µm-30 µm, and a lath width of a lath microstructure obtained at the same time is between 0.5 µm-1.5 µm, and a volume fraction of granular carbides precipitated among the laths is between 2-5%.

In the present invention, the design principle of chemical elements of the cold-rolled steel plate is described as follows:
C: In the cold-rolled steel plate of the present invention, adding an appropriate amount of C element can improve the strength of steel products to ensure the occurrence and strength of martensite and bainitic transformation. Therefore, in order to exert beneficial effects of C element, in the cold-rolled steel plate of the present invention, a mass percentage of C element is controlled between 0.18-0.25%.

The reason for controlling the mass percentage of C element between 0.18-0.25% is: when a mass percentage of C element is lower than 0.18%, it is impossible to ensure that strength of bainite and tempered martensite obtained after annealing meets requirements, and it will also lead to insufficient residual austenite, resulting in insufficient elongation; and when a mass percentage of C element is higher than 0.25%, the strength of the martensite produced is too high, which will lead to excessive strength of a steel plate.

Si: In the cold-rolled steel plate of the present invention, adding an appropriate amount of Si element can appropriately improve hardenability, and Si in the steel can affect the interaction of dislocations, increase the work hardening rate, and improve the elongation of steel products, which is beneficial to obtaining a better formability. In addition, Si also helps to inhibit the precipitation of carbides at the grain boundaries and ensure a higher hole expansion rate. Based on this, in order to exert beneficial effects of Si element, in the cold-rolled steel plate of the present invention, a mass percentage of Si element needs to be controlled between 1.5-2.0%.

Mn: In the cold-rolled steel plate of the present invention, adding an appropriate amount of Mn element is beneficial to improving the hardenability of steel products and ensuring the strength of steel plates. However, it should be noted that when a content of Mn element in the steel is lower than 1.5%, the hardenability of a steel will be insufficient, and it will be difficult to ensure the completion of phase transition in a short time during the cooling process, and it will affect the strength of a steel plate; at the same time, a content of Mn element should not be too high, when a content of Mn element in the steel is higher than 2.3%, a temperature of martensitic phase transformation will be higher, and leading to a higher content of martensite obtained after rapid cooling, resulting in excessive strength of a steel plate and reduction of elongation. Based on this, in order to exert beneficial effects of Si element, in the cold-rolled steel plate of the present invention, a mass percentage of Mn element is controlled between 1.5-2.3%.

Nb: In the cold-rolled steel plate of the present invention, adding an appropriate amount of Nb element is beneficial to grain refinement, thereby improving the elongation and hole expansion rate of a steel plate. At the same time, the precipitation of an appropriate amount of dispersed niobide can enhance the strength in the bainite phase, so that the strength difference of each phase in the final annealed structure is small, leading to more difficulties in forming cracks under stress conditions, thereby improving the hole expansion rate of steel products. Based on this, in the cold-rolled steel plate of the present invention, a mass percentage of Nb element is controlled between 0.01-0.06%.

It can be seen that in the present invention, the addition of the content of C is mainly for martensite and bainite; the design of the content of Si is conducive to inhibiting the precipitation of carbides on the bainite interface; the design of the content of Mn is to obtain a certain hardenability to ensure the strength of a steel plate, but the additive amount of Mn should not be too high, so as to avoid the formation of harder martensite during the cooling process to affect the hole expansion rate; Nb element can refine the grain size, and the precipitation of other dispersed niobide can effectively balance the strength of different microstructures inside a steel plate. Thus, the present invention can obtain a cold-rolled steel plate with high hole expansion, high elongation and high strength.

By adopting the above technical solution, by only adding the main elements of C, Si, Mn and a certain amount of Nb element, and preferably adding less than or equal to 0.013%, preferably less than or equal to 0.01% of Ti element, a required basic performance of the cold-rolled steel plate can be obtained through the reasonable design of element contents and ratios, which has good manufacturability and economy.

It should be noted that in the present invention, the microstructure of the prepared cold-rolled steel plate is bainite + tempered martensite + residual austenite, wherein a phase ratio (volume fraction) of bainite and tempered martensite with uniform lath-like shape is 95% or more, and a phase ratio of residual austenite is 5% or less, and fine carbides precipitate around the lath-like tempered martensite.

The microstructure of the cold-rolled steel plate prepared by the present invention mainly comprises bainite and tempered martensite, and compared with the dual-phase steel composed of martensite and ferrite, the hole expansion rate of the cold-rolled steel plate prepared by the present invention is better.

Further, the cold-rolled steel plate of the present invention further comprises 0<Ti≤0.013%.

In the above technical solutions of the present invention, Ti is an element that can be added optionally. In the present invention, the content of Ti element needs to be especially controlled. Compounds of Ti element easily precipitate at the grain boundaries, resulting in a serious decrease in the hole expansion rate. Therefore, in the cold-rolled steel plate of the present invention, a mass percentage of Ti element needs to be controlled to satisfy: 0<Ti≤0.013%.

Further, in the cold-rolled steel plate of the present invention, among the inevitable impurities, P≤0.015%, S≤0.003%, and N≤0.005%.

In the cold-rolled steel plate of the present invention, P, S and N are all unavoidable impurity elements. In order to ensure the quality of steel products, the content of impurity elements in the steel should be as low as possible if permitted.

In the present invention, the contents of P, S and N elements in the steel need to be strictly controlled, wherein a mass percentage of P element needs to be controlled to be P≤0.015%. Compounds such as MnS made by S element will affect the formability of steel products, so a mass percentage of S element in the steel needs to be controlled to be S≤0.003%.

Accordingly, N element can easily cause occurrence of cracks or bubbles on the surface of slab products, and in order to ensure the quality of products, a mass percentage of N element in the steel needs to be controlled to meet N≤0.005%.

Further, the cold-rolled steel plate of the present invention has a yield strength of ≥650 MPa, a tensile strength of ≥980 MPa, a uniform elongation of ≥7%, an elongation at break of ≥13%, and a hole expansion ratio of ≥50%.

Further, the cold-rolled steel plate of the present invention has a yield strength of ≥700 MPa, a tensile strength of ≥990 MPa, a uniform elongation of ≥7%, an elongation at break of ≥13%, and a hole expansion ratio is ≥50%.

Further, in the cold-rolled steel plate of the present invention, the thickness of the cold-rolled steel plate is 1.2-1.8 mm.

The cold-rolled steel plate of the present invention can be used as a substrate of a galvanized steel plate, and galvanization can be performed on the surface of the cold-rolled steel plate. Therefore, accordingly, another object of the present invention is to provide a galvanized steel plate, which comprises the above-mentioned cold-rolled steel plate of the present invention and a galvanized layer on the surface of the cold-rolled steel plate.

It should be noted that, based on the cold-rolled steel plate of the present invention, a galvanized layer is further coated on its surface, the cold-rolled steel plate after galvanization can further obtain a good corrosion resistance, and the galvanized steel plate made of the cold-rolled steel plate is particularly suitable for the forming of high-strength vehicle components.

In addition, another object of the present invention is to provide a manufacturing method for the above-mentioned cold-rolled steel plate, which comprises the steps of:
(1) Smelting and casting to obtain a steel slab;
(2) Hot rolling;
(3) Cold rolling;
(4) Annealing: an annealing soaking temperature is 890-920 °C, a soaking and heat preservation time is 80-150 s, and then cooling is performed at a cooling rate of 30-100 °C/s to reach 270-350 °C;
(5) Overaging: an overaging temperature is 450-475 °C, and an overaging time is 40-60 s.

Another object of the present invention is to provide a manufacturing method for the above-mentioned galvanized steel plate, which is simple, feasible and can effectively prepare the galvanized steel plate. The manufacturing method can not only be used to prepare the cold-rolled steel plate of the present invention, but can also be used further to obtain the corresponding galvanized steel plate based on the prepared cold-rolled steel plate.

The manufacturing method of the galvanized steel plate of the present invention comprises the following steps:
(1) Smelting and casting to obtain a steel slab;
(2) Hot rolling;
(3) Cold rolling;
(4) Annealing: an annealing soaking temperature is 890-920 °C, a soaking and heat preservation time is 80-150 s, and then cooling is performed at a cooling rate of 30-100 °C/s to reach 270-350 °C;
(5) Overaging: an overaging temperature is 450-475 °C, and an overaging time is 40-60 s;
(6) Entering into a zinc pot for galvanizing;
(7) Alloying;
(8) Leveling.

In the above manufacturing method of the present invention, a cold-rolled steel plate with good mechanical properties and usage performance can be effectively prepared according to reasonable chemical composition design and optimized manufacturing process. Then, the galvanized steel plate of the present invention is obtained after galvanizing, alloying and leveling of the cold-rolled steel plate.

The core improvement of the present invention is to optimize and control the parameters of annealing process and overaging process, and by using this process and in combination with chemical element composition designed by inventors, a cold-rolled steel plate with a microstructure of bainite + tempered martensite + residual austenite and a volume fraction of bainite and tempered martensite of ≥ 95% can be obtained. The cold-rolled steel plate prepared by the manufacturing method of the present invention has the characteristics of high ductility and high hole expansion rate, and has both high overall ductility and great part plastic deformation ability, thus the cold-rolled steel plate has a balanced performance. Meanwhile, the cold-rolled steel plate after galvanization can further obtain an excellent corrosion resistance, and the galvanized steel plate made of this cold-rolled steel plate is particularly suitable for the forming of high-strength vehicle components.

In the annealing step of the above step (4) of the present invention, the annealing soaking temperature is selected to be 890-920 °C, and the soaking and heat preservation time is limited to be 80-150 s. The reason is: the object is to obtain a satisfactory austenite size and a satisfactory size of a lath structure generated after phase transition, otherwise, if the annealing soaking temperature is lower than 890 °C or the heat preservation time is lower than 80 s, the microstructure will not be completely austenized, so that a higher content of bainite + tempered martensite cannot be formed as a final structure; and if the annealing soaking temperature is higher than 920 °C or the heat preservation time exceeds 150 s, a high temperature austenite (also called original austenite) will be too coarse, which will affect the final mechanical properties of the steel products.

In addition, keeping the above annealing soaking temperature within the temperature range defined in the present invention can also prevent the occurrence of ferrite phase transformation, avoid generating relatively soft ferrite, and reducing the hole expansion rate. Certainly, in some preferred embodiments, in order to obtain a better implementation effect, the annealing soaking temperature can also be preferably controlled between 900-920 °C.

Herein, a size of an original austenite grain formed by annealing is between 10 µm-30 µm, and a lath width of a lath-like microstructure obtained at the same time is between 0.5 µm-1.5 µm, and a volume fraction of granular carbides precipitated among the laths is between 2-5%.

Accordingly, in the annealing step of the above step (4) of the present invention, a cooling rate of 30-100 °C/s is defined, which is higher than that of the prior art, that is, the present invention adopts a rapid cooling method to cool the cold-rolled steel plate to 270-350 °C. This rapid cooling method can increase the temperature of recrystallization, shorten the completion time of recrystallization, refine the grains, and improve the comprehensive mechanical properties of the steel plate. During the heating process, transverse magnetic induction heating can be specifically used to heat to the soaking and heat preservation temperature.

It should be noted that in the annealing step of the present invention, cooling the cold-rolled steel plate to 270-350 °C and keeping heat preservation for a period of time, for example, 20 seconds, so as to quickly generate part of martensite, thereby ensuring the strength of the steel plate. In the present invention, if the temperature after the rapid cooling is lower than 270 °C, excessive martensite will generate, resulting in excessive strength; if the temperature after rapid cooling is higher than 350 °C, martensite will not generate, and the heat preservation time is not enough to allow a complete occurrence of bainite phase transformation, making it difficult to ensure the final performance of a steel plate.

Accordingly, in step (5) of the manufacturing method of the present invention, an overaging treatment is directly performed on the cold-rolled steel plate after annealing, and the temperature and time of overaging are strictly controlled. In this stage, bainite phase transformation is in progress, although the time required for bainite phase transformation is relatively long, due to a certain amount of martensite phase transformation occurring in the early stage, the bainite phase transformation in this stage can occur completely. At the same time, a satisfactory volume fraction of cementite precipitates can be obtained.

Further, in the manufacturing method of the present invention, in step (2), heating the steel slab to 1150-1250 °C, keeping at this temperature for more than or equal to 0.5 hour, then hot rolling at a temperature of more than or equal to Ac3 (a final temperature at which all ferrite is transformed into austenite during heating), then cooling to a coiling temperature at a rate of 30-100 °C/s before coiling, and coiling, wherein the coiling temperature is 450-750 °C.

In the hot rolling step of step (2) of the present invention, cooling is required after hot rolling, and then coiling is further performed, and the coiling temperature is controlled between 450-750 °C. Preferably, in some preferred embodiments, the coiling temperature can be controlled between 450-550 °C.

Compared with the prior art, the coiling temperature of 450-750 °C designed in the present invention is relatively low, which is set adapted to the composition ratio of the present invention. A too high coiling temperature is easy to cause serious external oxidation of the surface under the steel plate composition design of the present invention, making the shape uneven, thereby causing uneven heating, and the uneven heating will affect the surface quality of the final product; accordingly, when the coiling temperature is too low, it will cause the formation of martensite, leading to a too high strength, and thereby making the cold rolling process difficult to carry out.

Accordingly, it should be noted that in the heating step of the present invention, the hot rolling heat preservation time of the steel slab can be controlled to be more than or equal to 0.5 hours, for example, controlled to be 0.5 to 3 hours. In some preferred embodiments, it can also be further controlled to be 0.5 to 2 hours.

It should be noted that in the present invention, the microstructure of the steel plate during the hot rolling process of step (2) mainly comprises ferrite and pearlite.

Further, in the manufacturing method of the present invention, in step (3), the cold rolling deformation is 30-65%, preferably 40-65%.

Further, in the manufacturing method of the present invention, in step (6), the temperature of the zinc pot is 450-475 °C.

Further, in the manufacturing method of the present invention, in step (7), the alloying temperature is 500-530 °C, and the alloying time is 20-40 s.

In the above technical solutions of the present invention, an alloying temperature can be preferably controlled to be 500-530 °C, and an alloying time can be controlled to be 20-40 s. The galvanized steel plate is alloyed and martensite tempered. On the one hand, Fe-Zn alloy can be obtained at the interface of the galvanized layer, and on the other hand, the martensite structure generated in the early stage can be processed into tempered martensite, so that the strength of which is closer to that of bainite, while improving the elongation and toughness of steel products.

Further, in the manufacturing method of the present invention, in step (8), a leveling rate of ≤0.3% is used for leveling.

It should be noted that in the leveling process of step (8), the leveling process can adopt the existing commonly used methods, for example, a leveling rate can be controlled to be 0-0.3% for leveling. Of course, in some preferred embodiments, a leveling rate can be further controlled to be 0-0.2% for leveling.

Compared with the prior art, the cold-rolled steel plate for galvanized steel plate and the manufacturing method therefor of the present invention have the following advantages and beneficial effects:
In the present invention, the inventors have made a reasonable chemical composition design of the cold-rolled steel plate and optimized the design of the relevant manufacturing process. By applying a suitable annealing process and an suitable overaging process, a cold-rolled steel plate with high ductility and high hole expansion rate can be effectively prepared, and the cold-rolled steel plate has both high overall ductility and great part plastic deformation ability, and has a yield strength of ≥650 MPa, a tensile strength of ≥980 MPa, a uniform elongation of ≥7%, an elongation at break of ≥13%, and a hole expansion rate of ≥50%, and the performance is balanced, and great economic and social benefits are achieved.

Based on the above design, the cold-rolled steel plate obtained by the present invention can obtain a microstructure of bainite + tempered martensite + residual austenite, which has a volume fraction of ≥95% of uniform lath-like bainite and tempered martensite, and fine carbides precipitate around the lath-like tempered martensite. The microstructure of the cold-rolled steel plate mainly comprises bainite and tempered martensite, and compared with the dual-phase steel composed of martensite and ferrite in the current prior art, it has a better hole expansion rate.

Based on the obtained cold-rolled steel plate, it can be galvanized by the manufacturing method of the present invention to obtain a galvanized steel plate, and the galvanized steel plate not only has the excellent performance of the cold-rolled steel plate, but also has excellent corrosion resistance, which is particularly suitable for the forming of high-strength vehicle components and can be effectively used in the manufacture of automobile structures to achieve lightweight of automobiles, with great economic and social benefits.

### Brief Description of the Drawings

Figure 1 is a microscopic microstructure photograph of the cold-rolled steel plate of Example 2 under a scanning electron microscope (SEM).
Figure 2 is a microscopic microstructure photograph of the cross-sectional galvanized layer of the galvanized steel plate of Example 2 under a scanning electron microscope (SEM).

### Detailed Description

The cold-rolled steel plate for galvanized steel plate and the manufacturing method therefor described in the present invention will be further explained and illustrated below in conjunction with specific examples. However, such explanation and illustration do not constitute an improper limitation on the technical solution of the present invention.

### Example 1-6 and Comparative Example 1-5

Table 1 lists the mass percentages of chemical elements in the cold-rolled steel plates of the galvanized steel plates of Examples 1-6 and the comparative steel plates of Comparative Examples 1-5.

**Table 1. (wt%, the balance is Fe and other unavoidable impurities except P, S and N)**

| Number | Chemical Elements | | | | | | | |
|---|---|---|---|---|---|---|---|---|
| | C | Si | Mn | Nb | Ti | P | S | N |
| Example 1 | 0.19 | 1.72 | 2.20 | 0.02 | 0.010 | 0.014 | 0.0025 | 0.003 |
| Example 2 | 0.25 | 1.63 | 2.04 | 0.03 | 0.0069 | 0.0044 | 0.001 | 0.0029 |
| Example 3 | 0.18 | 1.50 | 2.24 | 0.06 | 0 | 0.006 | 0.003 | 0.0027 |
| Example 4 | 0.19 | 1.82 | 2.03 | 0.04 | 0.013 | 0.008 | 0.003 | 0.0036 |

| | | | | | | | | |
|---|---|---|---|---|---|---|---|---|
| Example 5 | 0.20 | 2.0 | 2.12 | 0.03 | 0.0048 | 0.0129 | 0.001 | 0.0029 |
| Example 6 | 0.18 | 1.97 | 1.57 | 0.04 | 0.012 | 0.005 | 0.003 | 0.0024 |
| Comparative Example1 | **0.15** | **1.42** | 2.01 | 0.02 | 0.007 | 0.012 | 0.001 | 0.0021 |
| Comparative Example2 | 0.19 | **1.71** | **1.32** | 0.04 | **0.014** | 0.011 | 0.0009 | 0.003 |
| Comparative Example 3 | 0.21 | **1.43** | 1.83 | **0.07** | **0.0186** | 0.0126 | 0.0006 | 0.0032 |
| Comparative Example 4 | 0.18 | 1.74 | 2.21 | **0.001** | 0.007 | 0.0104 | 0.0009 | 0.0024 |
| Comparative Example 5 | 0.18 | **1.42** | **2.58** | 0.02 | 0.0065 | 0.0086 | 0.0008 | 0.0025 |
| Comparative Example 6 | 0.20 | 2.0 | 2.12 | 0.03 | 0.0048 | 0.0129 | 0.001 | 0.0029 |

The galvanized steel plates of Examples 1-6 of the present invention are all prepared by the following steps:
(1) Smelting and casting to obtain a steel slab according to the chemical composition shown in Table 1.
(2) Hot rolling: heating the steel slab to 1150-1250 °C, keeping the temperature for more than or equal to 0.5 hour, then hot rolling at a temperature above or equal to Ac3 (a final temperature at which all ferrite is transformed into austenite during heating), then cooling to a coiling temperature at a rate of 30-100 °C/s, and coiling, wherein the coiling temperature is controlled to be 450-750 °C, preferably 450-550 °C.
(3) Cold rolling: the cold rolling deformation is controlled to be 30-65%.
(4) Annealing: the annealing soaking temperature is controlled to be 890-920 °C, preferably 900-920 °C; the soaking and heat preservation time is controlled to be 80-150 s, and then cooling is performed at a cooling rate of 30-100 °C/s to reach 270-350 °C.
(5) Overaging: the overaging temperature is controlled to be 450-475 °C, and the overaging time is controlled to be 40-60 s.
(6) Entering into a zinc pot for galvanizing: the temperature of the zinc pot is controlled to be 450-475 °C, and hot galvanizing time is controlled to be 10-15 s.
(7) Alloying: the alloying temperature is controlled to be 500-530 °C, and the alloying time is controlled to be 20-40 s.
(8) Leveling: the leveling rate is controlled to be 0-0.3% for leveling, and preferably the leveling rate can be controlled to be 0-0.2% for leveling.

It should be noted that in step (1), the smelting and casting processes used in Examples 1-6 and Comparative Examples 1-5 are the same, and are all conventional existing operating processes. For example, the specific operation is that a slab with a length that meets the requirements is obtained after RH vacuum degassing, LF furnace desulfurization and then continuous casting of a molten steel, and after the obvious defects on the surface of the slab are cleaned, hot rolling in the subsequent step (2) is performed.

In the present invention, based on the work process of steps (1) to (5), Examples 1-6 and Comparative Examples 1-5 can prepare the corresponding cold-rolled steel plates of Examples and Comparative Examples according to the chemical elements of the cold-rolled steel plates designed in Table 1. Based on the obtained cold-rolled steel plates, galvanizing, alloying and leveling are performed through steps (6) to (8) to obtain the corresponding galvanized steel plates.

It should be noted that the galvanized steel plates of Examples 1-6 in the present invention are all prepared by the work process of steps (1) to (8) above, and all of their chemical composition and related process parameters meet the control requirements of the design specifications of the present invention.

Unlike Examples 1-6, although the comparative steel products of Comparative Examples 1-5 are also prepared with the above-mentioned manufacturing process, parameter(s) that does not meet the design requirements of the present invention exists in their chemical composition design and specific manufacturing processes.

Table 2-1 and Table 2-2 list the specific process parameters of the galvanized steel plates of Examples 1-6 and the comparative steel plates of Comparative Examples 1-5 in the steps of the above-mentioned manufacturing method.

**Table 2-1.**

| Number | Step (2) | | | | | | Step (3) |
|---|---|---|---|---|---|---|---|
| | Heating Temperature (°C) | Heat Preservation Time (h) | Hot Rolling Temperature (°C) | Ac3 (°C) | Cooling Rate (°C) | Coiling Temperature (°C) | Cold Rolling Deformation (%) |
| Example 1 | 1220 | 2.5 | 910 | 841.4 | 90 | 480 | 40 |
| Example 2 | 1210 | 0.5 | 920 | 825.0 | 30 | 660 | 50 |
| Example 3 | 1190 | 1.5 | 915 | 833.3 | 50 | 750 | 40 |
| Example 4 | 1150 | 1.0 | 917 | 856.1 | 70 | 540 | 50 |
| Example 5 | 1250 | 2.0 | 920 | 852.9 | 100 | 450 | 65 |
| Example 6 | 1200 | 2.0 | 910 | 880.5 | 80 | 520 | 45 |
| Comparative Example1 | 1200 | 2.0 | 910 | 845.7 | 50 | 520 | 50 |
| Comparative Example2 | 1150 | 2.0 | 905 | 849.4 | 50 | 510 | 50 |
| Comparative Example 3 | 1180 | 2.0 | 915 | 846.4 | 50 | 520 | 60 |
| Comparative Example 4 | 1200 | 2.0 | 915 | 838.9 | 50 | 540 | 50 |
| Comparative Example 5 | 1180 | 2.0 | 910 | 816.9 | 50 | 480 | 40 |
| Comparative Example 6 | 1250 | 2.0 | 920 | 852.9 | 100 | 450 | 65 |

**Table 2-2.**

| Number | Step (4) | | | | | Step (5) | | | Step (6) | Step (7) | | Step (8) |
|---|---|---|---|---|---|---|---|---|---|---|---|---|
| | Heating Rate (°C/s) | Annealing Soaking Temperatur e (°C) | Soakin g and Heat Preserv ation Time (s) | Cooling Rate (°C/s) | Rapid Cooling Outlet Temperatur e (°C) | Overaging Temperatur e (°C) | Overagin 9 Time (s) | Thicknes s of Cold-Rolled Steel Plate (mm) | Zinc Pot Temperatur e (°C) | Alloying Temperatur e (°C) | Alloying Time (s) | Leveling Rate (%) |
| Example 1 | 50 | 920 | 80 | 80 | 280 | 455 | 40 | 1.4 | 455 | 520 | 30 | 0.1 |
| Example 2 | 60 | 915 | 120 | 70 | 350 | 465 | 50 | 1.2 | 465 | 515 | 40 | 0.3 |
| Example 3 | 50 | 915 | 100 | 60 | 290 | 465 | 50 | 1.0 | 465 | 530 | 20 | 0.1 |
| Example 4 | 50 | 920 | 120 | 100 | 320 | 455 | 40 | 1.2 | 455 | 500 | 35 | 0.2 |
| Example 5 | 50 | 890 | 90 | 30 | 290 | 475 | 60 | 1.8 | 475 | 510 | 30 | 0.3 |
| Example 6 | 50 | 910 | 150 | 60 | 280 | 465 | 60 | 1.4 | 465 | 515 | 30 | 0.2 |
| Comparativ e Example1 | 50 | **875** | 120 | 100 | 300 | 455 | 40 | 1.5 | 455 | 510 | 20 | 0.2 |
| Comparativ e Example2 | 50 | **875** | 120 | 100 | 280 | 465 | 50 | 1.3 | 465 | 520 | 40 | 0.1 |
| Comparativ e Example 3 | 50 | **835** | 120 | 30 | 300 | 460 | 40 | 1.2 | 460 | 510 | 20 | 0.1 |
| Comparativ e Example 4 | 50 | **865** | 120 | 50 | 310 | 455 | 50 | 1.4 | 455 | 500 | 20 | 0.1 |
| Comparativ e Example 5 | 50 | **890** | 120 | 60 | 305 | 465 | 40 | 1.7 | 465 | 510 | 30 | 0.2 |
| Comparativ e Example 6 | 60 | **855** | 120 | 60 | 340 | 420 | 50 | 1.7 | 465 | 500 | 20 | 0.2 |

It should be noted that in the present invention, after completing the work process of the above steps (1) to (5), and obtaining the corresponding cold-rolled steel plates according to the chemical compositions designed in Examples 1-6 and Comparative Examples 1-5 in Table 1, the cold-rolled steel plates of Examples 1-5 and Comparative Examples 1-5 prepared by the above process can be sampled respectively, and the microstructures of the substrates of the samples of Examples 1-6 and Comparative Examples 1-5 can be further observed. After observation of the microstructures of each example and comparative example, the performance of the cold-rolled steel plates prepared in Examples 1-5 and Comparative Examples 1-5 can be further tested.

In the present invention, the samples in the examples and comparative examples were polished, and after corrosion of 4% dilute nitric acid, the metallographic microstructures of the examples and comparative examples were observed with an optical microscope and a scanning electron microscope. The volume fraction of bainite is determined by the structural morphology, and the average value is obtained after statistics of multiple microstructures, and the volume fraction of residual austenite is determined by experimental means of XRD (X-ray diffraction), and the results of the observation are listed in the following Table 3.

Table 3 lists the observation results of metallographic microstructure of the cold-rolled steel plates of Examples 1-6 and the cold-rolled steel plates of Comparative Examples 1-6.

**Table 3.**

| Number | Microstructure | Volume Fraction of Bainite and Tempered Martensite (%) | Volume Fraction of Residual Austenite (%) | Diameter Size of Original Austenite Grain (µm) | Width of Lath in Microstructure (µm) | Volume Fraction of Precipitated Carbides (%) |
|---|---|---|---|---|---|---|
| Example 1 | Bainite + Tempered Martensite + Residual Austenite | 96.2 | 3.8 | 15.4 | 0.8 | 3 |
| Example 2 | Bainite + Tempered Martensite + Residual Austenite | 97.3 | 2.7 | 20.8 | 1.2 | 2 |
| Example 3 | Bainite + Tempered Martensite + Residual Austenite | 98.2 | 1.8 | 28.8 | 1.3 | 5 |
| Example 4 | Bainite + Tempered Martensite + Residual Austenite | 97.5 | 2.5 | 22.4 | 1.4 | 3 |
| Example 5 | Bainite + Tempered Martensite + Residual Austenite | 95.4 | 4.6 | 16.9 | 0.6 | 4 |
| Example 6 | Bainite + Tempered Martensite + Residual Austenite | 95.2 | 4.8 | 24.3 | 0.8 | 3 |
| Comparative Example1 | Ferrite + Bainite + Tempered Martensite + Residual Austenite | **82.2** | 5.5 | 14.5 | 0.8 | 0.1 |
| Comparative Example2 | Ferrite + Bainite + Tempered Martensite + Residual Austenite | **88.6** | 6.3 | 13.5 | 1.2 | 2 |
| Comparative Example 3 | Ferrite + Bainite + Tempered Martensite + Residual Austenite | **56.4** | 5.3 | 10 | 1.5 | 1.2 |
| Comparative Example 4 | Ferrite + Bainite + Tempered Martensite + Residual Austenite | **75.2** | 4.2 | 12.3 | 0.7 | 1.2 |
| Comparative Example 5 | Bainite + Tempered Martensite + Residual Austenite | **86.4** | 4.6 | 15 | 1.0 | 3 |
| Comparative Example 6 | Ferrite + Bainite + Tempered Martensite + Residual Austenite | **83.5** | 3.2 | 14.8 | 1.1 | 2 |

It can be seen from Table 3 that the microstructures of the cold-rolled steel plates in Examples 1-6 are all bainite + tempered martensite + residual austenite, and a volume fractions of bainite and tempered martensite are ≥ 95%. The bainite and tempered martensite are in the form of laths, and fine carbides precipitate around the lath-like tempered martensite.

Accordingly, while comparing the performance tests of the sample steel plates of the examples and comparative examples, the composition measurement standard of the examples and comparative examples adopts GB/T 223, and the test methods of yield strength, tensile strength and elongation are carried out in accordance with the measurement standard GB/T228-2002, and the elongation gauge length is 50 m; the hole expansion performance test is carried out in accordance with the standard GB/T15825.4-2008, and the final results of the performance tests are listed in the following Table 4.

Table 4 lists the performance test results of the cold-rolled steel plates of Examples 1-6 and the cold-rolled steel plates of Comparative Examples 1-5.

**Table 4.**

| Number | Yield Strength (MPa) | Tensile Strength (MPa) | Uniform Elongation (%) | Elongation at Break (%) | Hole Expansion Ratio (%) |
|---|---|---|---|---|---|
| Example 1 | 719 | 1031 | 8.3 | 14.3 | 52.9 |
| Example 2 | 880 | 1056 | 7.2 | 13.6 | 56.3 |
| Example 3 | 742 | 998 | 9.1 | 14.3 | 52.6 |
| Example 4 | 753 | 1031 | 9 | 14 | 55.8 |
| Example 5 | 836 | 1039 | 8.5 | 14.2 | 51.4 |
| Example 6 | 786 | 1024 | 7.7 | 13.8 | 52.6 |
| Comparative Example1 | **559** | **871** | 13.6 | 19.2 | **48.5** |
| Comparative Example2 | **522** | **835** | 14.5 | 23.6 | **29.6** |
| Comparative Example 3 | 660 | 1098 | **6.4** | **11.7** | **21.8** |
| Comparative Example 4 | 689 | 1040 | 9.5 | 13.7 | **43** |
| Comparative Example 5 | 1045 | 1198 | **6.2** | **11.4** | 68.5 |
| Comparative Example 6 | **652** | **955** | **8.2** | **16.1** | **35.4** |

It can be seen from Table 4 that in the present invention, the yield strengths of the cold-rolled steel plates of Examples 1-6 are between 719-880 MPa, the tensile strengths are between 998-1056 MPa, the uniform elongations are between 7.2-9.1%, and the elongations at break are between 13.6-14.3%. At the same time, the cold-rolled steel plates of Examples 1-6 also have relatively high hole expansion rates, which are between 51.4-56.3%.

It can be seen from the above examples that in the present invention a cold-rolled steel plate with high ductility and high hole expansion rate characteristics can be obtained through appropriate chemical composition design and optimized manufacturing process, and the cold-rolled steel plate has both high overall ductility and good local plastic deformation ability, and thus has a balanced performance.

At the same time, an excellent performance of corrosion resistance can be obtained after subsequent galvanizing of this cold-rolled steel plate, and the galvanized steel plate made of this cold-rolled steel plate is particularly suitable for the forming of high-strength vehicle components.

Accordingly, unlike Examples 1-6, the performance of the cold-rolled steel plates prepared in Comparative Examples 1-6 is significantly inferior to that of Examples 1-6 due to the presence of parameter(s) that does not meet the design requirements of the present invention.

In Comparative Example 1, due to the low carbon content, the tensile strength of the steel plate is less than 980 MPa, and due to low C content, increasing Ac3 temperature, and difficulty in fully austenitizing at an annealing temperature of 875 °C, some ferrite will remain, resulting in existence of a softer ferrite phase in the final structure, thus leading to a low hole expansion rate of the plate product.

In Comparative Example 2, since the content of Mn element in the steel is too low, the tensile strength of the steel plate cannot meet the requirements.

In Comparative Example 3, since the content of Si element in the steel is too low, it will lead to a low elongation of a steel plate. Meanwhile, since the content of Ti element is too high, precipitates such as TiC are easily generated, which will cause formation of cracks during the hole expansion process, resulting in a low hole expansion rate of a steel plate.

In Comparative Example 4, since the content of Nb element in the steel is too low, it is impossible to obtain sufficient precipitation phase of Nb compound, resulting in a large difference in strength between phases in the microstructure of the final cold-rolled steel plate, and the hole expansion ratio cannot meet the requirements.

In Comparative Example 5, since the content of Mn element in the steel is too high, the yield strength and tensile strength of the finally obtained cold-rolled steel plate are too high, and the elongation is low.

In Comparative Example 6, the composition meets the requirements, but the annealing process is not within the required range, and a suitable microstructure cannot be obtained, resulting in low yield strength and tensile strength of the final cold-rolled steel plate with a low hole expansion rate of less than 50%.

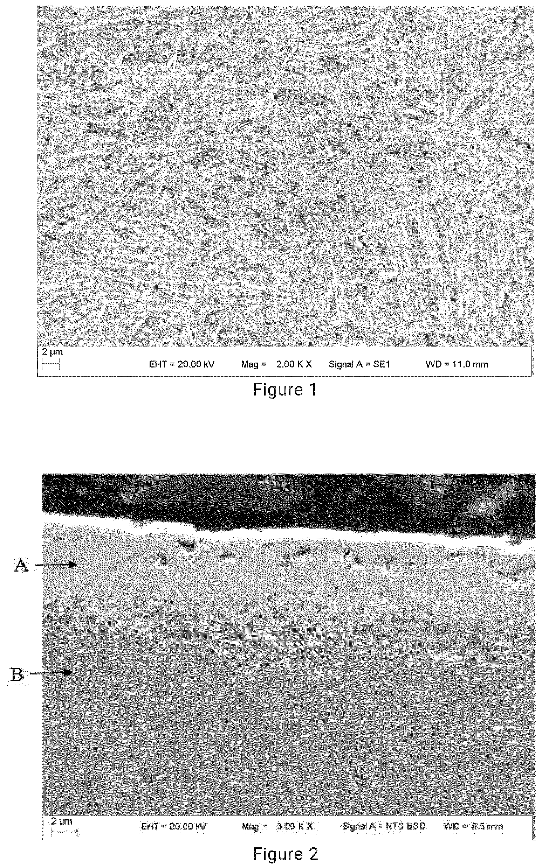

Figure 1 is a microscopic microstructure photograph of the cold-rolled steel plate of Example 2 under a scanning electron microscope (SEM).

As shown in Figure 1, Figure 1 is a metallographic microstructure photograph of the cold-rolled steel plate after annealing process in Example 2. It can be seen from Figure 1 that the microstructure of obtained cold-rolled steel plate is bainite + tempered martensite + residual austenite, and the volume fraction of lath-like bainite and tempered martensite in the cold-rolled steel plate of Example 2 is 97.3%, and the volume fraction of residual austenite is 2.7%.

Figure 2 is a microscopic microstructure photograph of the cross-sectional galvanized layer of the galvanized steel plate of Example 2 under a scanning electron microscope (SEM).

As can be seen from Figure 2, in the galvanized steel plate of Example 2, the upper shiny layer is an alloyed galvanized layer A, and the thickness of which is uniform and continuous, and the thickness of the galvanized layer is about 10 µm. The darker layer below is a substrate B, and the alloyed galvanized layer A and the substrate B are well combined.

It should be noted that the prior art in the protection scope of the present invention is not limited to the embodiments given in the present application documents, and all prior art that does not contradict the scheme of the present invention, including but not limited to prior patent documents, prior public publications, prior public uses, etc., can be included in the protection scope of the present invention.

In addition, the combination of the various technical features in this invention is not limited to the combinations described in the claims of this invention or the combinations described in the specific embodiments, and all technical features recorded in this invention can be freely combined or integrated in any way unless there is a contradiction between them.

It should also be noted that the above-listed embodiments are only specific embodiments of the present invention. Obviously, the present invention is not limited to the above embodiments, and all similar changes or modifications made therewith, which can be directly derived or easily associated with by those skilled in the art from the contents disclosed in the present invention, should belong to the protection scope of the present invention.

## Claims

1. A cold-rolled steel plate for a galvanized steel plate comprising Fe and inevitable impurities, and further comprising the following chemical elements in mass percentage:
C: 0.18-0.25%, Si: 1.5-2.0%, Mn: 1.5-2.3%, and Nb: 0.01-0.06%;
wherein a microstructure of the cold-rolled steel plate is bainite + tempered martensite + residual austenite, wherein a volume fraction of bainite and tempered martensite is ≥95%.

2. The cold-rolled steel plate according to claim 1, wherein the mass percentages of each chemical elements are:
C: 0.18-0.25%, Si: 1.5-2.0%, Mn: 1.5-2.3%, Nb: 0.01-0.06%, and a balance of Fe and inevitable impurities.

3. The cold-rolled steel plate according to claim 1 or 2, wherein the cold-rolled steel plate further comprises 0<Ti≤0.013% in mass percentage.

4. The cold-rolled steel plate according to claim 1 or 2, wherein among the inevitable impurities, P≤0.015%, S≤0.003%, and N≤0.005%, in mass percentage.

5. The cold-rolled steel plate according to claim 1 or 2, wherein the cold-rolled steel plate has a yield strength of ≥650 MPa, a tensile strength of ≥980 MPa, a uniform elongation of ≥7%, an elongation at break of ≥13%, and a hole expansion ratio of ≥50%; preferably, the cold-rolled steel plate has a yield strength of ≥700 MPa, a tensile strength of ≥990 MPa, a uniform elongation of ≥7%, an elongation at break of ≥13%, and a hole expansion ratio of ≥50%.

6. The cold-rolled steel plate according to claim 1 or 2, wherein in the cold-rolled steel plate, a size of an original austenite grain formed by annealing is between 10 µm-30 µm, and a lath width of a lath-like microstructure obtained at the same time is between 0.5 µm-1.5 µm, and a volume fraction of granular carbides precipitated among the laths is between 2-5%.

7. The cold-rolled steel plate according to claim 1 or 2, wherein in the cold-rolled steel plate, a volume fraction of residual austenite is ≥1.0%, such as ≥1.5%; preferably, in the cold-rolled steel plate, a volume fraction of bainite and tempered martensite is 95-99%, and a volume fraction of residual austenite is 1-5%; preferably, in the cold-rolled steel plate, a volume fraction of bainite and tempered martensite is 95-98.5%, and a volume fraction of residual austenite is 1.5-5%.

8. A galvanized steel plate comprising the cold-rolled steel plate according to any one of claims 1 to 7 and a galvanized layer on a surface of at least one side of the cold-rolled steel plate.

9. A manufacturing method for the cold-rolled steel plate according to any one of claims 1 to 7, comprising the steps of:
(1) Smelting and casting to obtain a steel slab;
(2) Hot rolling;
(3) Cold rolling;
(4) Annealing: an annealing soaking temperature is 890-920 °C, a soaking and heat preservation time is 80-150 s, and then cooling is performed at a cooling rate of 30-100 °C/s to reach 270-350 °C;
(5) Overaging: an overaging temperature is 450-475 °C, and an overaging time is 40-60 s.

10. A manufacturing method for the galvanized steel plate according to claim 8, comprising the steps of:
(1) Smelting and casting to obtain a steel slab;
(2) Hot rolling;
(3) Cold rolling;
(4) Annealing: an annealing soaking temperature is 890-920 °C, a soaking and heat preservation time is 80-150 s, and then cooling is performed at a cooling rate of 30-100 °C/s to reach 270-350 °C;
(5) Overaging: an overaging temperature is 450-475 °C, and an overaging time is 40-60 s;
(6) Entering into a zinc pot for galvanizing;
(7) Alloying;
(8) Leveling.

11. The manufacturing method according to claim 9 or 10, wherein in step (2), heating the steel slab to 1150-1250 °C, keeping the temperature for more than or equal to 0.5 hour, then hot rolling at a temperature of more than or equal to Ac3, then cooling to a coiling temperature at a rate of 30-100 °C/s, and coiling, wherein the coiling temperature is 450-750 °C.

12. The manufacturing method according to claim 9 or 10, wherein in step (3), a cold rolling deformation is 30-65%.

13. The manufacturing method according to claim 10, wherein in step (6), a temperature of the zinc pot is 450-475 °C.

14. The manufacturing method according to claim 10, wherein in step (7), an alloying temperature is 500-530°C, and an alloying time is 20-40s.

15. The manufacturing method according to claim 10, wherein in step (8), leveling is performed with a leveling rate of lower than or equal to 0.3%.
